# EUROPEAN PATENT APPLICATION

(11) **EP 1 582 103 A1**
(43) Date of publication of application: **05.10.2005**
(21) Application number: 05006571.3
(22) Date of filing: 24.03.2005
(51) Int. Cl.: A23L 1/20, A23L 1/186, A23L 1/23, A23L 1/238

(54) **Novel food and production method thereof**

(30) Priority: 31.03.2004 JP 2004104534
(71) Applicant: Ajinomoto Co., Inc., Tokyo 104-8315 (JP)
(72) Inventor: Ito, Keiko Ajinomoto Co., Inc., Kawasaki-shi Kanagawa (JP); Kayahara, Atsuko Ajinomoto Co., Inc., Kawasaki-shi Kanagawa (JP); Hibino, Gaku Ajinomoto Co., Inc., Kawasaki-shi Kanagawa (JP); Nishimura, Yutaka Ajinomoto Co., Inc., Kawasaki-shi Kanagawa (JP); Nishimura, Yasushi Ajinomoto Co., Inc., Kawasaki-shi Kanagawa (JP); Nishiuchi, Hiroaki Ajinomoto Co., Inc., Kawasaki-shi Kanagawa (JP)
(74) Representative: Strehl Schübel-Hopf & Partner

(57) **Abstract**

The present invention provides a seasoning and a processed food which are obtained by processing a fermented soybean paste-like foodstuff, and a method of the production thereof.

The foodstuff is obtained by a method of producing a food which comprises making a solid koji from a plant raw material and koji mold, adding steam-cooked or roasted plant raw material to the resulting solid koji, and hydrolyzing the obtained unrefined soy in the presence of less than 5 % sodium chloride and/or gluconic acid salt.

## Description

### [Technical Field]

The present invention relates to a novel seasoning, a processed food and the production method thereof in which a fermented soybean paste-like food material produced by a bacteriostatic method in place of using high concentrations of sodium chloride.

### [Background Art]

There are many kinds of fermented soybean pastes that are conventional fermented foods from old times in Japan, which are rooted in each region. Therefore, they can be classified from various aspects, however, they can be broadly classified based on the employed raw material into: rice fermented soybean pastes (kome miso) made from rice as a principal raw material, wheat fermented soybean pastes (mugi miso) made from wheat as a principal raw material, and bean fermented soybean pastes (mame miso) made from soybean as a principal raw material. Further, methods of the production of a fermented soybean paste also vary widely, they include the following main steps. First, to soybean, wheat or rice as a raw material that was soaked in water, steam-cooked and cooled is inoculated a koji mold starter, whereby producing solid koji. This solid koji is cultured at a certain temperature range (for example, 30 to 40°C), at a certain humidity range (for example, 90 to 95% RH), for a certain period of time (for example, 40 to 48 hrs), thereby Koji mold is allowed to grow on the surface in a koji making step. In this koji making step, koji mold produces a large quantity of catabolic enzymes such as protease, pectinase, amylase and lipase. Next, to the solid koj i following the koj i making are added steam-cooked or roasted grain such as soybean, rice, wheat and the like and an aqueous salt solution for a bacteriostatic purpose to obtain an unrefined soy of a fermented soybean paste. Fermented soybean paste is produced through fermentation and aging of this unrefined soy of fermented soybean paste for several months to several years. Because the fermented soybean paste is produced according to the method as described above, the fermented soybean paste is hydrolyzed into a state which looks different from the original shape of the raw materials.

Conventionally, Japanese have taken various kinds of fermented foods such as fermented soybean pastes, soy sauces and fermented soybeans (natto) to ingest nutrients required for health. Particularly in recent years, dietary habits of Japanese predominantly eating cereals and marine products such as soybean, rice and fish have attracted attention from all the countries of the world because Japan is the most longevity country in the world. On the other hand, in Japan, Western life style also affects dietary habits, resulting in changes from the rice diet to bread diet, from the soup of a fermented soybean paste (miso soup) to other soups. In order to magnify the consumption of the fermented soybean paste as healthy diet not only in Japan but in the world, development of foods has been desired in which a novel fermented soybean paste-like foodstuff is utilized which is suited for Westernized modern society.

However, fermented soybean pastes contain 6 to 13% of sodium chloride, therefore, the consumption has stagnated owing to popular belief that overconsumption of fermented soybean pastes causes excessive ingestion of salt, thereby preventing the sufficient appeal of its healthy value. Further, when a large amount of fermented soybean paste is used, the food becomes so salty that the amount of the fermented soybean paste which may be added to a food is usually only 13% or less for use as a seasoning (Fifth ed. Food Composition Table, 2001, p. 418), leading to a ground for stagnation of the consumption of fermented soybean paste.

Taking such social and technical background into consideration, investigations on production method for reducing sodium chloride content of the fermented soybean paste such as reduced-salt fermented soybean paste or salt-free fermented soybean paste have been carried out. For example, a production method for a high-protein containing food using low-salt fermented soybean paste produced by diluting and dialyzing a fermented soybean paste (JP-A No. S58-175463), a production method for salt-free fermented soybean paste by dilution of a fermented soybean paste with water (JP-A No. S63-214154), a production method for koji in which a raw material treatment of the source for koji, i.e., water spray, steaming, cooling, and koji making are carried out in a single apparatus using a rotary pressurizing drum (JP-A No. H07-1079663), a method in which a nisin lactic acid bacterium is used in place of sodium chloride (Handbook of applied unheated sterilization of foods, Takeo Katou, p. 216) and the like have been disclosed. However, according to the fermented soybean paste manufactured by these methods, utilization as a substitute for conventional fermented soybean paste is merely intended. Other applications may include the following two typical examples. One is an invention which relates to a refreshing beverage that involves combination of the flavor of the fermented soybean paste and the sweet taste of fruit juice (Japanese Patent No. 1947954). Another example produces a nutritious food through powderization of a fermented soybean paste alone or a fermented soybean paste mixed with other nutrient (JP-A No. 2001-346536). In this technique, the fermented soybean paste powder thus manufactured is adjusted to have the shape as a nutritional supplement through capsulation or pelletization. However, no idea has been proposed to shape fermented soybean paste itself of salt-free type which was produced by hydrolyzing a raw material thereby producing a novel processed food having the shape like cheese, bean curd, bar, or solid roux. Furthermore, also in cases of use of the reduced-salt or salt-free fermented soybean paste in conventional seasoning applications, specific method in practice as use in seasoning applications has not been investigated based on the idea of merely intending to provide a substitute for the fermented soybean paste. Although sodium chloride is referred to as affecting hydrolysis of raw materials through inhibiting the reaction of various enzymes and the like, the fermented soybean paste-like foodstuff produced by keeping the bacteriostatic state without using sodium chloride includes different compositions from those in conventional fermented soybean paste. Therefore, methods of utilization and effects of such a foodstuff are greatly different also in cases of use in seasoning applications. For example, an idea to utilize a fermented product prepared by adding koji mold to boiled bean or steamed bean for a food is disclosed (WO 98/5262). In connection with this method, an idea to utilize a material prepared by keeping the fermentation temperature of 50 to 70°C, preferably 60°C, and allowing aging in this state for approximately 6 to 12 hrs in the fermentation and maturation step for a food is disclosed. Because optimal temperature of enzymatic activity varies depending on the kinds thereof, it is difficult to predict the degree of hydrolysis of the raw material. However, hydrolysis ratio of the raw material is estimated to be not so high because the fermentation temperature of usual fermented soybean paste is approximately 30°C, and the hydrolysis period is from 1 year through several years. Moreover, a method in which gluconic acid is substituted for sodium chloride to obtain a material when koj i mold is added to the raw material to allow for hydrolysis is disclosed (JP-A No. 2001-346536). In this method, addition of gluconic acid results in unique flavor and hydrolysis ratio being not that high. On the other hand, a method in which a fermented soybean paste-like material is manufactured through hydrolyzing the raw material utilizing nisin that is one of bacteriocin as a bacteriostatic agent which can be substituted for sodium chloride is disclosed. In this document, it is described that "Deterioration of prepared foods such as daily dish and boxed meals, and processed foods such as dipping sauces and dressings can be effectively prevented when lactic acid fermented soybean paste is utilized." in the chapter of "issue and possibility in the future" (Handbook of applied unheated sterilization of foods, Takeo Katou, p. 216). However, such utilization in foods is merely presented as "Issue and possibility in the future", and specific description is not found as to how it may be utilized in effect, and effects exerted upon use. Accordingly, it is believed that the technique has not been established as a practicable one. Further, it is not described as probability of the utilization of the low-salt fermented soybean paste-like food of the invention.

### [Disclosure of the Invention]

### [Problems that the Invention is to Solve]

An object of the present invention is to provide a seasoning and a processed food which are obtained by processing a food, in particular a fermented soybean paste-like foodstuff, produced in the presence of a low concentration of sodium chloride for the bacteriostatic purpose, and a method of the production thereof.

### [Means for Solving the Problems]

The present inventors elaborately investigated in order to solve the aforementioned problem, and consequently, conceived a method for utilizing a food, in particular a fermented soybean paste-like food material, produced by using a bacteriostatic process being a substitute for adding sodium chloride or a gluconic acid salt in the step of the said material comprising making solid koji with koji mold, and a method for producing a processed food with the said material. Thus, the inventors found that the processed food produced according to such a procedure is a novel processed food which has not been present so far in terms of umami taste, richness, and thickness. The present inventors found that the processed food shaped by adding other foodstuff such as enzymes, oils and fats and gelatin to the aforementioned fermented soybean paste-like food material is a novel food which has not been present so far. Additionally, the inventors found that when a fermented soybean paste-like food material produced using nisin as a bacteriostatic method which can be a substitute for using sodium chloride is utilized as a seasoning material, novel effects are achieved because high solubilization ratio of amino acids is provided on behalf of the absence of inhibitory effect of the protease activity exerted by sodium chloride, and hydrolysis ratio of carbohydrates and the like is liable to be reduced because of short aging period. Accordingly, the present invention is as described below.
(1) A method of producing a food which comprises making a solid koji from a plant raw material and koji mold, adding steam-cooked or roasted plant raw material to the resulting solid koji, and hydrolyzing the obtained unrefined soy in the presence of less than 5 % sodium chloride and/or gluconic acid salt.
(2) The method according to (1) wherein the food is a soybean paste-like food material.
(3) The method according to (1) or (2) which additionally comprises mixing the food with a food material other than a fermented soybean paste-like food material.
(4) The method according to any one of (1) to (3), wherein the said plant raw material comprises soybean, rice or wheat.
(5) The method according to any one of (1) to (4), wherein the said koji making and/or hydrolyzing the unrefined soy is carried out in the presence of a culture broth of a bacteriocin producing lactic acid bacterium, disrupted cells, a cell fraction or a supernatant thereof, or in an aseptic and airtight container.
(6) The method according to any one of (1) to (5), wherein the said fermented soybean paste-like food material is obtained by (1) adding koji mold and a culture broth of a bacteriocin producing lactic acid bacterium or disrupted cells, a cell fraction or a supernatant thereof to a plant raw material selected from soybean, rice and wheat, (2) making koji in a koj i-making machine in which the outside air is shut out except for the time period of "TEIRE"-treatment, while supplying sterilized air continuously or intermittently, (3) then mixing thus resulting koji with a culture broth of a bacteriocin producing lactic acid bacterium or disrupted cells, a cell fraction or a supernatant thereof, and further optionally mixing with previously steam-cooked or roasted one or more grain(s) selected from soybean, rice and wheat in an amount of 0.01 to 50 times by weight of the resulting koji, (4) then forming the unrefined soy by making the paste form of the mixture, (5) and then hydrolyzing the unrefined soy essentially in the absence of sodium chloride.
(7) The method according to any one of (1) to (6), wherein the said bacteriocin is nisin.
(8) The method according to any one of (1) to (7), wherein the said food is a seasoning, a soup, a retorted food or a confectionery.
(9) The method according to any one of (1) to (8), wherein the said seasoning is a chili seasoning, a soy sauce, a stock, a sauce, a tomato product, a dressing or a roux.
(10) A method of producing a processed food comprising a step of shaping the food obtained by the method according to any one of (1) to (9).
(11) The method according to (10), wherein the said processed food is a bar-shaped food, a solid roux type food, a baked confectionery or a wet type food containing 10 to 95% by weight of moisture.
(12) The method according to (10) or (11), wherein the said shaping step is carried out by using an enzyme.
(13) The method according to (10) or (11), wherein the said shaping step is carried out by baking.
(14) The method according to (10) or (11), wherein the said shaping step is carried out by heating and cooling with using fat or oil.
(15) The method according to (10) or (11), wherein the said shaping step is carried out by heating and cooling with using a gelatin and/or polysaccharide.
(16) A food obtained by the method according to any one of (1) to (15).

### [Advantage of the Invention]

As the advantage of the present invention, a novel seasoning and a processed food can be provided which satisfy a sense of healthiness and capable of being able to be used as a seasoning or a foodstuff in larger quantity than conventional ones because the salt content is less, and exhibits richness and thickness with a quality that can not be provided by any other material.

### [Best Mode for Carrying Out the Invention]

In the present invention, the food, in particular the fermented soybean paste-like food material, which may be used is not particularly limited as long as it is a foodstuff obtained through keeping a bacteriostatic state without adding sodium chloride and/or gluconic acid salt for the bacteriostatic purpose. Generally, in the fermentation process of a fermented soybean paste or a fermented soybean paste-like foodstuff, the amount of sodium chloride added for the purpose of suppressing proliferation of undesired microorganisms, i.e., for the bacteriostatic purpose is 5 to 10% by weight per the weight of the unrefined soy in the low-salt fermented soybean paste, while it is 10% by weight or greater in traditionalfermentedsoybean paste. Therefore, the amount of sodium chloride and/or gluconic acid salt present in the production step according to the invention may be less than 5%, preferably less than 1%, and more preferably less than 0.1% per the weight of the unrefined soy. Thus, sodium chloride and/or gluconic acid salt content in the resulting fermented soybean paste-like food material shall be less than 5% by weight, preferably less than 1%, and more preferably less than 0.1%. In light of the sensory aspect, it is desired that the material is obtained using the process for keeping the bacteriostatic state that is preferably at least one or more selected from the group consisting of: a process in which a culture broth of a bacteriocin producing lactic acid bacterium or a supernatant thereof is added upon production of the solid koji; a process in which a culture broth of a bacteriocin producing lactic acid bacterium or a supernatant thereof is added to a charging water added to the solid koji; and a process in which a bacteriostatic state is kept by carrying out the production of the solid koji and the hydrolysis of the unrefined soy of fermented soybean paste in an aseptic airtight container. Generally, soybean needs to be mixed with koj i molds for making koji or added in the resulting koji to obtain unrefined soy. The bacteriostatic process including the following 5 steps is desired as one which enables scale up to an industrial level. The "TEIRE"-treatment referred to herein means the steps of periodically agitating koji for the purpose of accelerating growth of the Koji mold during the koji making.
Step 1: adding koji mold and a culture broth of a bacteriocin producing lactic acid bacterium or a supernatant thereof to a plant raw material such as soybean, rice or wheat;
Step 2: making koji in a koji-making machine-in which the outside air is shut out except for the time period of "TEIRE"-treatment, while supplying sterilized air continuously or intermittently;
Step 3: then mixing thus resulting koji with a culture broth of a bacteriocin producing lactic acid bacterium or a supernatant thereof, and further adding previously steam-cooked or roasted one or more grain(s) selected from soybean, rice, wheat and the like in an amount of 0.01 to 50 times by weight of the resulting koji as needed;
Step 4: then obtaining an unrefined soy by making the paste form of the mixture; and
Step 5: then hydrolyzing the unrefined soy essentially in the absence of sodium chloride.

In the invention, the plant raw material for the solid koji to be used may be soybean, rice, wheat or the like which has been used in traditional fermented soybean paste. Such raw material may be subjected to soaking in water, steam-cooking or roasting as needed.

In the invention, the culture broth of a bacteriocin producing lactic acid bacterium and a supernatant thereof which may be used are not particularly limited as long as the bacteriostatic effect can be kept. Examples of the bacteriocin produced by lactic acid bacteria include nisin, pediocin, sakacin, nukacin and the like. Among them, nisin is preferably used in light of the wide antibacterial spectrum. When nisin is used, the kind of nisin which is produced by lactic acid bacteria may be any one of nisin A, nisin Z and analogues thereof. Higher bacteriocin activity in the culture broth of a lactic acid bacterium or a supernatant thereof for use is more preferred for preventing contamination with and proliferation of microorganisms. Thus, for example, L. lactis AJ110212 (FERM BP-8552) and the like which highly produce nisin Z can be used. The L. lactis AJ110212 strain was deposited on November 19, 2003 with National Institute of Advanced Industrial Science and Technology, Patent Microorganisms Depositary Center under the accession number of FERM BP-8552.

According to the invention, the aseptic airtight container for use is not particularly limited as long as production of the solid koji and hydrolysis of the unrefined soy of fermented soybean paste can be aseptically conducted while keeping the bacteriostatic state. It is desired that one having a function to supply sterilized air into the koji making machine and having a structure capable of shutting off the interior of the koji making machine from the ambient air, for example, a koji making machine of the rotary drum type is used.

A "koji mold" is a mold inoculated to a plant material to obtain koji which is the resource of enzymes to hydrolyze the plant material. In the invention, the koji mold is not particularly limited as long as it is any one used in traditional fermented soybean paste or soy sauce. For example, *A. oryase* and/or A. sojae can be used. It is desired that the koj i mold for use can highly hydrolyze the raw material protein into amino acids and peptides, and can impart thickness, strong umami taste and richness to the resultant fermented soybean paste-like food material, but not particularly limited thereto.

In the invention, the foodstuff mixed with the fermented soybean paste-like food material produced by the aforementioned process is not particularly limited as long as it is edible, and processible. As a matter of course, examples of the foodstuff which can be used include various types of sauces, sodium chloride, vinegar, seasonings, spices, soy sauces, tomato products, dressings, fermented soybean pastes, cereals, potatoes, starches, sugars, sweeteners, beans, nuts and seeds, vegetables, fruits, mushrooms, algae, seafoods, meats (including gelatins), eggs, dairy products, oils and fats, beverages, cooked processed foods and the like. Foods obtainable according to the invention include seasonings, soups, retorted foods and confectionaries. In the invention, soups include Western soups such as potage and consommé, Chinese soup such as hot-and-sour soup and Japanese soup such as miso soup. In the invention, retorted foods include packaged foods sterilized at high temperature and under high pressure, for example, heated at 120°C for more than 4 minutes and packaged food sterilized in hot water at 80°C to 100°C. Some of the examples are cooked rice, curry, stew, Hamburg steak, broiled fish, powdered meat, salmon flake, boiled bean, and the like.

In the invention, mixing ratio of the fermented soybean paste-like food material and a food material other than the fermented soybean paste-like food material in the shaped food is not particularly limited as long as it is a ratio which enables ingestion of the fermented soybean paste-like foodstuff. The amount of the fermented soybean paste-like foodstuff to be used is preferably 1 to 99 parts by weight in light of the strength of the taste.

In the invention, the term "seasoning" means any one which make the taste well-balanced when it is added to various types of foods. Specifically, illustrative examples thereof include the seasonings described in Fifth ed. Food Composition Table. That is, chili seasonings such as Tobanjan (fermented broad bean paste with red pepper), seasoning sauces such as soy sauces, dried bonito base seasoning sauces, seasoning sauces for Chinese dishes, seasoning sauces for Western dishes, seasoning sauce for Japanese dishes, consommé cube, consommé liquid and granular flavorings, tomato products such as ketchup and tomato sauces, dressings, rouxes such as rouxes for curry, rouxes for hash and rouxes for stew, and the like are included. Additionally, as a matter of course, sauces for broiled fishes and sauces for roasted meats, seasoning mixes such as sauces for Chinese dishes and seasonings for fried chicken are included.

In the invention, illustrative examples of the sauce include Worcestershire sauces such as Worcestershire sauce, moderately concentrated (chuno) sauces and concentrated (noukou) sauce, chili pepper sauces classified in chili seasonings, or seasoning sauces such as oyster sauce, seasoning mixes for Ma-po Dou-fu (Chinese style Tofu and minced meat) and meat sauces, tomato sauces classified in tomato products, chili sauces or white sauces, brown sauce, and the like.

The food obtained according to the invention can be distributed in general shape. The food may be in the shape of paste as it is, or may be powderized as needed. Illustrative examples of the process for powderization include vacuum drying processes, freeze-drying processes, spray dry processes, drum drier processes, vacuum drum dryer processes, micro wave drying processes and the like. Upon this process, an excipient may be added as needed. Examples of the excipient (bulking agent) which may be added include dextrin, lactose, salts, sodium glutamate, granulated sugar, gelatin and the like.

In the invention, the processed food characterized by subjecting to shaping is not particularly limited as long as it is a food whose shape is kept as shaped, but may include bar-shaped foods, solid roux type foods, baked confectioneries or wet type foods containing 10 to 95% by weight of moisture and the like. The bar-shaped food may be prepared by shaping in e. g. , a columnar shape, and may be either a wet type prepared by packing into a mold, or a dry type prepared by baking. Examples of the baked confectionery include cookies, biscuits, muffins,' sponge cakes, rice crackers and the like. Wet type foods referred to herein mean solid or semisolid foods containing 10 to 95% by weight of moisture such as cheese, bean curd, yogurt, pudding and the like. The moisture content of the wet type foods is more preferably 30 to 85% by weight in the light of shelf life, easiness to eat and the like. Examples of the process for shaping include packing processes in a mold, hardening processes with an enzyme, hardening processes with dehydration and heating-denaturing through application of heat such as baking, steaming and the like, hardening processes with an oil or a fat, hardening processes with gelatin, a polysaccharide or a thickener, hardening processes with a coagulating agent, hardening processes with freezing, hardening processes with drying, and the like.

In the invention, the enzyme for use upon shaping is not particularly limited as long as it enables shaping through mixing with the fermented soybean paste-like food material and the other foodstuff. For example, transglutaminase can be illustrated. Although transglutaminase is classified into calcium independent ones and calcium dependent ones, either one may be used according to the invention. Examples of the former include those derived from microorganisms such as mycobacteria, *Bacillus subtilis* and the like (see, e.g., JP-A No. S64-27471). Examples of the latter include those derived from guinea pig liver (see, JP-B No. H01-50382), those derived from microorganisms such as *Oomycota,* those derived from animals such as bovine blood, porcine blood and the like, those derived from fishes such as salmon, red sea bream and the like (see, e.g., Nobuo Seki et *al.,* "Nippon Suisan Gakkai-shi (Fisheries Science), VOL. 56, 125-132 (1990)" and " Summary report of the lecture in The Japanese Society of Fisheries Science, meeting in spring in 1990, p.219", those referred to as factor XIII existing in blood (13th factor) (WO93/15234), those derived from oyster, those included in minced fish used for manufacture of fish sausage and the like, and the like. In addition, any transglutaminase may be used such as those produced by gene recombination (JP-A Nos. H01-300889, H06-225775, H07-23737, European Patent Publication EP-0693556A) and the like. Origin and process for the production of the enzyme are not limited. Preferably, calcium independent one may be used in the light of functional and economical aspects for food applications. More preferably, transglutaminase derived from a microorganism (JP-A No. S64-27471) may be also used.

In the invention, when the process for shaping is a method in which baking is conducted, baking with an oven or the like may be carried out after mixing the fermented soybean paste-like food material and a food material other than the fermented soybean paste-like food material, and the process for baking is not particularly limited. The baking temperature is not particularly limited as long as it falls within a range that allows shaping the food. Shaping can be controlled by extending the baking time period when the temperature is low. To the contrary, when the temperature is high, it can be controlled by shortening the baking time period. In general, the temperature employed in the baking step, i.e., 90 to 230°C is preferably since ordinary baking equipment can be used. In light of the operation, the temperature of 100 to 180°C is more preferred.

In the invention, the oil and fat for use in the shaping is not particularly limited as long as it is hardened in the cooling process and melted and homogenous in the heating process after it is mixed with a fermented soybean paste-like food material. For example, as a matter of course, vegetable oils and fats such as hydrogenated soybean oil, animal fats such as lard and beef fat, butters, margarines, other oils and fats (including shortening) and the like may be used.

In the invention, gelatin and polysaccharides which may be used upon shaping are not particularly limited as long as it is hardened in the cooling process and melted and homogenous in the heating process after it is mixed with a fermented soybean paste-like food material. For example, gelatins derived from cow, pig, birds or fishes as the gelatin, agar, carrageenan, alginic acid salts, starches such as potato, gums such as guar gum and xanthan gum as the polysaccharide may be used.

Because the novel food obtained according to the method of the invention is tasty, functional ingredients for health of the fermented soybean paste such as isoflavone and saponin in a large quantity can be readily ingested in daily lives. Also, when it is used as a seasoning, it is not only a mere substitute for the fermented soybean paste, but can impart a novel taste and flavor because it exhibits richness and thickness which is not found in conventional products.

Hereinafter, the invention will be explained with reference to Examples. However, it should not be construed that the invention is anyhow bound by the following Examples.

### [Example 1]

### (Cheese-like wet type food 1)

Soybean in an amount of 50 kg was soaked in water to allow water absorption, followed by steam-cooking at 114°C for 40 minutes in a steam cooker. The steam-cooked soybean was put in an airtight type koj i making machine, and further mixed with 1 kg of a culture broth of L. lactis AJ110212 (FERM BP-8552) (nisin activity: 4500 IU/ml) and 0.05 kg of a koji mold starter ("Koji mold starter for fermented soybean paste" manufactured by Bioc), followed by subjecting to koji making at 30°C for 43 hrs. For heat removal of the heat generated upon fermentation during koji making, supply of the air sterilized by passing through a HEPA filter was conducted. During the koji making, koji was made in a koji making machine in which the outside air was shut out except for the time period of "TEIRE"-treatment(a step of stirring the mixture in the koji making machine for the purpose of accelerating the growth of the Koji mold). The "TEIRE"-treatment was carried out for 15 minutes every 10 hours after initiation of the koji making. To thus resulting solid koji was added 37 kg of a culture broth of L. lactis AJ110212 (FERM BP-8552) (nisin activity: 4500 IU/ml). After mixing, the mixture was subjected to grinding with a chopper to give a paste form. This paste was packed in a laminated pouch such that 500 g was filled in one pack. The unrefined soy of fermented soybean paste was hydrolyzed by incubating this pouch at 30°C for 7 days, and a fermented soybean paste-like food material was obtained by heating at 80°C for 40 minutes. To 34 parts by weight of this fermented soybean paste-like food material were added 28 parts by weight of powdered soybean milk (manufactured by Forestlee Corporation, trade name: MU-TENKA TONYUU POWDER (additive-free soybean milk powder)) and 2 parts by weight of sodium chloride. The materials were mixed to be homogenous in a mortar, and thereto were added 16 parts by weight of water and 20 parts by weight of shortening (manufactured by Snow Brand Milk Products Co., Ltd., trade name: Shortening) followed by mixing. The mixture was put in a container, and subjected to a heat treatment in a hot water bath at 85°C for 40 minutes followed by cooling to obtain a cheese-like food. Because this cheese-like food exhibited a rich taste, it could be eaten as it is or could be eaten together with bread, cracker or the like. For this food, sensory evaluations by the panel consisting of 10 experts were carried out. As a control, a similar food prepared through replacing the fermented soybean paste-like food material with a commercially available traditional fermented soybean paste in an equal amount was used. The results of evaluation are shown in Table 1. The numerical values in Table 1 represent numbers of the expert who chose the sample as being more preferable. The product prepared using the fermented soybean paste-like food material of the invention was preferred in the overall evaluation.

**[Table 1]**

| Evaluation standard | Fermented soybean paste-like food | Control |
|---|---|---|
| Smell Flavor | 4 | 6 |
| Sweetness preference | 5 | 5 |
| Saltiness preference | 10 | 0 (sharp saltiness) |
| Bitterness preference | 3 | 7 |
| Umami preference | 9 | 1 |
| Overall | 8 | 2 |

### [Example 2]

### (Cheese-like wet type food 2)

To 14 parts by weight of the fermented soybean paste-like food material prepared according to the method described in Example 1 were added 30 parts by weight of powdered soybean milk (manufactured by Forestlee Corporation, trade name: MU-TENKA TONYUU POWDER), 1.5 parts by weight of a salt and 4.5 parts by weight of sugar. The materials were mixed to be homogenous, and thereto were added 19 parts by weight of shortening (manufactured by Snow Brand Milk Products Co. , Ltd. , trade name: Shortening) and 31 parts by weight of water followed by mixing. Thereafter, the mixture was subjected to heat treatment in a hot water bath at 85°C for 40 minutes followed by cooling to obtain a cheese-like food. Because this food exhibited a rich taste, it could be eaten as it is or could be eaten together with bread, cracker or the like. For this food, sensory evaluations by the panel consisting of 10 experts were carried out. As a control, a similar food prepared through replacing the fermented soybean paste-like food material with a commercially available traditional fermented soybean paste in an equal amount was used. The results of evaluation are shown in Table 2. The numerical values in Table 2 represent numbers of the expert who chose the sample as being more preferable. The product prepared using the fermented soybean paste-like food material of the invention was preferred in the overall evaluation.

**[Table 2]**

| Evaluation standard | Fermented soybean paste-like food | Control |
|---|---|---|
| Smell - Flavor | 5 | 5 |
| Sweetness preference | 5 | 5 |
| Saltiness preference | 10 | 0 (sharp saltiness) |
| Bitterness preference | 3 | 7 |
| Umami preference | 10 | 0 |
| Overall | 9 | 1 |

### [Example 3]

### (Sea urchin-like wet type food)

To 28 parts by weight of the fermented soybean paste-like food material prepared according to the method described in Example 1 were added 12 parts by weight of shortening (manufactured by Snow Brand Milk Products Co., Ltd., trade name: Shortening), 2 parts by weight of sodium chloride, 5.5 parts by weight of soy sauce (manufactured by YAMASA CORPORATION, trade name: Shoyu), 0.5 parts by weight of seaweed tea (manufactured by Gyokuroen Shokuhin Kogyo K. K. , trade name: Konbu tya), and 7 parts by weight of fresh cream (manufactured by Morinaga Milk Industry Co., Ltd., trade name: Morinaga Cake whip), and mixed in a mortar. Thereto was added 2 parts by weight powdered gelatin (manufactured by Maruha Corporation, trade name: Jellice) dissolved in 14 parts by weight of water followed by mixing, and thereto was further added 30 parts by weight of egg yolk heated at 70°C for 20 minutes followed by stirring to be homogenous. Thereafter, the mixture was poured into a mold followed by cooling to obtain a sea urchin-like food. This product exhibited the texture and taste like sea urchin. For this sea urchin-like food, sensory evaluations by the panel consisting of 10 experts were carried out. As a control, a similar food prepared through replacing the fermented soybean paste-like food material with a commercially available traditional fermented soybean in an equal amount was used. The results of evaluation are shown in Table 3. The numerical values in Table 3 represent numbers of the expert who chose the sample as being more preferable. The product prepared using the fermented soybean paste-like food material of the invention was preferred in the overall evaluation.

**[Table 3]**

| Evaluation standard | Fermented soybean paste-like food | Control |
|---|---|---|
| Smell - Flavor | 5 | 5 |
| Sweetness preference | 4 | 6 |
| Saltiness preference | 9 | 1 |
| Bitterness preference | 4 | 6 |
| Umami preference | 8 | 2 |
| Overall | 8 | 2 |

### [Example 4]

### (Foie gras-like wet type food)

To 36 parts by weight of the fermented soybean paste-like food material prepared according to the method described in Example 1 were added 23.5 parts by weight of shortening (manufactured by Snow Brand Milk Products Co., Ltd., trade name: Shortening), 1.5 parts by weight of sodium chloride, 7 parts by weight of strong soy sauce (manufactured by YAMASA CORPORATION, trade name: Shoyu) and 9 parts by weight of fresh cream (manufactured by Morinaga Milk Industry Co., Ltd., trade name: Morinaga Cake whip), and mixed in a mortar. Thereto was added 4 parts by weight powdered gelatin (manufactured by Maruha Corporation, trade name: Jellice) dissolved in 18 parts by weight of water followed by mixing to be homogenous. Thereafter, the mixture was poured into a mold followed by cooling to obtain a foie gras-like food. This product exhibited the texture and taste like foie gras. For this foie gras-like food, sensory evaluations by the panel consisting of 10 experts were carried out. As a control, a similar food prepared through replacing the fermented soybean paste-like food material with a commercially available traditional fermented soybean paste in an equal amount was used. The results of evaluation are shown in Table 4. The numerical values in Table 4 represent numbers of the expert who chose the sample as being more preferable. The product prepared using the fermented soybean paste-like food material of the invention was preferred in the overall evaluation.

**[Table 4]**

| Evaluation standard | Fermented soybean paste-like food | Control |
|---|---|---|
| Smell - Flavor | 4 | 6 |
| Sweetness preference | 5 | 5 |
| Saltiness preference | 9 | 1 |
| Bitterness preference | 5 | 5 |
| Umami preference | 9 | 1 |
| Overall | 9 | 1 |

### [Example 5]

### (Bean curd (tofu)-like wet type food)

To 87 parts by weight of soybean milk (manufactured by TAISHI-FOOD CO., Ltd., trade name: Tonyuu) was added 13 parts by weight of the fermented soybean paste-like food material prepared according to the method described in Example 1, and mixed in a mortar to be homogenous. Thereto was added 0.5 parts by weight of a 1.5% aqueous solution of transglutaminase (manufactured by Ajinomoto Co., Inc., trade name: Activa TG, 1000 units/g) followed by mixing. Thereafter, the mixture was put in a container to allow a reaction of transglutaminase in a hot water bath at 40°C for 60 minutes. Next, the mixture was subjected to enzyme deactivation in a hot water bath at 85°C for 40 minutes followed by cooling to obtain a bean curd-like food. For this bean curd-like food, sensory evaluations by the panel consisting of 10 experts were carried out. As a control, a similar food prepared through replacing the fermented soybean paste-like food material with a traditional fermented soybean paste on the market in an equal amount was used. The results of evaluation are shown in Table 5. The numerical values in Table 5 represent numbers of the expert who chose the sample as being more preferable. The product prepared using the fermented soybean paste-like food material of the invention was preferred in the overall evaluation.

**[Table 5]**

| Evaluation standard | Fermented soybean paste-like food | Control |
|---|---|---|
| Smell - Flavor | 5 | 5 |
| Sweetness preference | 5 | 5 |
| Saltiness preference | 9 | 1 |
| Bitterness preference | 2 | 8 |
| Umami preference | 9 | 1 |
| Overall | 9 | 1 |

### [Example 6]

### (Sesame bean curd (goma tofu)-like wet type food)

To 16 parts by weight of the fermented soybean paste-like food material prepared according to the method described in Example 1 was added 79 parts by weight of a soybean paste (manufactured by Aj ipro, sample name: soybean paste) followed by mixing in a mortar to be homogenous. Thereto was added 3 parts by weight of powdered arrowroot (manufactured by MITAKE SYOKUHIN, trade name: Honkuzu) followed by mixing. The mixture was put in a pan, gently heated at 85°C for 40 minutes while stirring, and poured into a mold followed by cooling to obtain a sesame bean curd-like food. This product exhibited a rich taste as avocado or ANKIMO (anglerfish liver) does. For this sesame bean curd-like food, sensory evaluations by the panel consisting of 10 experts were carried out. As a control, a similar food prepared through replacing the fermented soybean paste-like food material with a commercially available traditional fermented soybean paste in an equal amount was used. The results of evaluation are shown in Table 6. The numerical values in Table 6 represent numbers of the expert who chose the sample as being more preferable. The product prepared using the fermented soybean paste-like food material of the invention was preferred in the overall evaluation.

**[Table 6]**

| Evaluation standard | Fermented soybean paste-like food | Control |
|---|---|---|
| Smell - Flavor | 5 | 5 |
| Sweetness preference | 5 | 5 |
| Saltiness preference | 10 | 0 (sharp saltiness) |
| Bitterness preference | 3 | 7 |
| Umami preference | 10 | 0 |
| Overall | 10 | 0 |

### [Example 7]

### (Soybean spread-like wet type food)

To 24 parts by weight of the fermented soybean paste-like food material prepared according to the method described in Example 1 were added 20 parts by weight of powdered soybean milk (manufactured by Forestlee Corporation, trade name: MU-TENKA TONYUU POWDER), 1 part by weight of sodium chloride and 10 parts by weight of sugar. The materials were mixed in a mortar to be homogenous, and thereto were added 38 parts by weight of water and 8 parts by weight of shortening (manufactured by Snow Brand Milk Products Co., Ltd., trade name: Shortening) followed by mixing. The mixture was put in a container, and subjected to heat treatment in a hot water bath at 85°C for 30 minutes followed by cooling to obtain a soybean spread-like food. Because this food exhibited a rich taste, it could be eaten as it is or could be eaten together with bread, cracker or the like. For this soybean spread-like food, sensory evaluations by the panel consisting of 10 experts were carried out. As a control, a similar food prepared through replacing the fermented soybean paste-like food material with a commercially available traditional fermented soybean paste in an equal amount was used. The results of evaluation are shown in Table 7. The numerical values in Table 7 represent numbers of the expert who chose the sample as being more preferable. The product prepared using the fermented soybean paste-like food material of the invention was preferred in the overall evaluation.

**[Table 7]**

| Evaluation standard | Fermented soybean paste-like food | Control |
|---|---|---|
| Smell - Flavor | 5 | 5 |
| Sweetness preference | 5 | 5 |
| Saltiness preference | 10 | 0 (sharp saltiness) |
| Bitterness preference | 3 | 7 |
| Umami preference | 10 | 0 |
| Overall | 9 | 1 |

### [Example 8]

### (Bar-shaped food)

To 33 parts by weight of the powdered fermented soybean paste-like food material obtained by freeze-drying of the fermented soybean paste-like food material prepared according to the method described in Example 1 were added 17 parts by weight of powdered soybean, 17 parts by weight of powdered soybean milk (manufactured by Forestlee Corporation, trade name: MU-TENKA TONYUU POWDER) and 1 part by weight of sodium chloride. The materials were mixed in a mortar to be homogenous, and thereto were added 13 parts by weight of shortening (manufactured by Snow Brand Milk Products Co., Ltd., trade name: Shortening) and 20 parts by weight of honey (manufactured by NIHON HACHIMITSU CO., LTD., trade name: Hachi-mitsu) followed by mixing and shaping. Thereafter, the shaped preparation was baked in an oven at 110 to 170°C for 2 to 10 minutes to give a bar-shaped food. For this bar-shaped food, sensory evaluations by the panel consisting of 10 experts were carried out. As a control, a similar food prepared through replacing the powder of the fermented soybean paste-like food material with a freeze-dried product of a commercially available traditional fermented soybean paste in an equal amount was used. The results of evaluation are shown in Table 8. The numerical values in Table 8 represent numbers of the expert who chose the sample as being more preferable. The product prepared using the fermented soybean paste-like food material of the invention was preferred in the overall evaluation.

**[Table 8]**

| Evaluation standard | Fermented soybean paste-like food | Control |
|---|---|---|
| Smell - Flavor | 5 | 5 |
| Sweetness preference | 5 | 5 |
| Saltiness preference | 10 | 0 (sharp saltiness) |
| Bitterness preference | 4 | 6 |
| Umami preference | 8 | 2 |
| Overall | 8 | 2 |

### [Example 9]

### (Cookie 1)

In a bowl was placed 27 parts by weight of butter which was kneaded with a wooden dipper. Thereafter, 13 parts by weight of sucrose was added thereto and ground with mixing, followed by adding 5 parts by weight of whole egg. Next, thereto were added 40 parts by weight of wheat flour and 16 parts by weight of the powdered fermented soybean paste-like food material obtained by freeze-drying of the fermented soybean paste-like food material prepared according to the method described in Example 1. The mixture was then kneaded with hands, kept for about 30 minutes in the refrigerator followed by shaping, which was then baked in an oven at 170°C for 10 to 20 minutes to obtain a cookie. For this cookie, sensory evaluations by the panel consisting of 10 experts were carried out. As a control, a similar food prepared through replacing the freeze-dried fermented soybean paste-like food material with a freeze-dried product of a commercially available traditional fermented soybean paste in an equal amount was used. The results of evaluation are shown in Table 9. The numerical values in Table 9 represent numbers of the expert who chose the sample as being more preferable. The product prepared using the fermented soybean paste-like food material of the invention was preferred in the overall evaluation.

**[Table 9]**

| Evaluation standard | Fermented soybean paste-like food | Control |
|---|---|---|
| Smell - Flavor | 6 | 4 |
| Sweetness preference | 5 | 5 |
| Saltiness preference | 8 | 2 |
| Bitterness preference | 5 | 5 |
| Umami preference | 8 | 2 |
| Overall | 8 | 2 |

### [Example 10]

### (Cookie 2)

In a bowl was placed 28 parts by weight of butter which was kneaded with a wooden dipper. Thereafter, 8 parts by weight of whole egg was added thereto followed by stirring. Then, 51 parts by weight of dumpling mix (manufactured by MITAKE SYOKUHIN, trade name: Mitake Danngo-no Kona), 4 parts by weight of powdered bonito stock (manufactured by Aj inomoto Co., Inc., sample name: Honzukuri Ichiban Dashi Kiwami Katsuo Hunmatsu) and 8 parts by weight of the powdered fermented soybean paste-like food material obtained by freeze-drying of the fermented soybean paste-like food material prepared according to the method described in Example 1 were added thereto. The mixture was then kneaded with hands, kept for about 30 minutes in the refrigerator followed by shaping, which was then baked in an oven at 170°C for 10 to 20 minutes to obtain a cookie. For this cookie, sensory evaluations by the panel consisting of 10 experts were carried out. As a control, a similar food prepared through replacing the powdered fermented soybean paste-like food material with a freeze-dried product of a commercially available traditional fermented soybean paste in an equal amount was used. The results of evaluation are shown in Table 10 . The numerical values in Table 10 represent numbers of the expert who chose the sample as being more preferable. The product prepared using the fermented soybean paste-like food material of the invention was preferred in the overall evaluation.

**[Table 10]**

| Evaluation standard | Fermented soybean paste-like food | Control |
|---|---|---|
| Smell. Flavor | 6 | 4 |
| Sweetness preference | 6 | 4 |
| Saltiness preference | 7 | 3 |
| Bitterness preference | 5 | 5 |
| Umami preference | 9 | 1 |
| Overall | 8 | 2 |

### [Example 11]

### (Chicken consomme)

To 24 parts by weight of chicken consomme (manufactured by Aj inomoto Co. , Inc. , 1 kg can) were added 1000 parts by weight of boiling water and 0.5 parts by weight of the fermented soybean paste-like food material prepared according to the method described in Example 1,and the resulting solution was boiled. As a consequence of evaluating thus resulting chicken consommé, stronger meaty thickness, continuing umami taste were exhibited in comparison with one to which no fermented soybean paste-like food material was added.

### [Example 12]

### (Hot-pot)

In a pot put 750 parts by weight of water followed by boiling to which 72 parts by weight of the fermented soybean paste-like food material prepared according to the method described in Example 1, 6.5 parts by weight of sodium chloride and 36 parts by weight of Japanese sweet rice wine for cooking (manufactured Takara Shuzo Co., Ltd., trade name: Takara hon-mirin) were added. The pot was put over a fire, and after boiling, thereto were put 225 parts by weight of sliced pork loin with a width of 5 cm, 225 parts by weight of radish and 75 parts by weight of carrot cut into semi-circular slices or ginkgo leaf-shaped slices having a thickness of 3 to 5 mm followed by additional boiling on medium to low heat while skimming off the scum. Five minutes later, thereto were added 50 parts by weight of scallop, 115 parts by weight of bean sprout and 225 parts by weight of cabbage cut into bite-size, and boiled. After a lapse of 25 minutes, 75 parts by weight of green Chinese chives cut into pieces having a width of 5 cm were added thereto. After boiling the entirety, the heating was stopped. For this cooked food, sensory evaluations by the panel consisting of 10 experts were carried out. As a control, a similar food prepared through replacing the fermented soybean paste-like food material with a commercially available traditional fermented soybean paste in an equal amount was used. However, the fermented soybean paste used in the control contained an equal amount of sodium chloride to that added to this cooked food, therefore, no sodium chloride was added to the control. The results of evaluation are shown in Table 11. The numerical values in Table 11 represent numbers of the expert who chose the sample. The present cooked food had a more thickness and richness than the control, and a stronger bean flavor was perceived. Further, darker color and stronger titer of the taste were exhibited, and the taste was soaked into the vegetable materials.

**[Table 11]**

| Evaluation standard | Fermented soybean paste-like food | Control |
|---|---|---|
| Smell - Flavor | 4 | 6 |
| Sweetness preference | 5 | 5 |
| Saltiness preference | 8 | 2 |
| Bitterness preference | 4 | 6 |
| Umami preference | 7 | 3 |
| Overall | 7 | 3 |

### [Example 13]

### (Stir-fried meat and vegetables)

A frying pan was put over a fire, and 50 parts by weight of pork loin slices with a width of 5 cm were stir-fried briefly therein. Thereafter, 200 parts by weight of a vegetable mix was added thereto. After stir-frying until the materials become soften, heating was stopped, and thereto were added 21 parts by weight of the fermented soybean paste-like food material prepared according to the method described in Example 1 and 2.5 parts by weight of sodium chloride and well-mixed. The frying pan was again put over a fire and the entirety was heated. For this cooked food, sensory evaluations by the panel consisting of 10 experts were carried out. As a control, a similar food prepared through replacing the fermented soybean paste-like food material with a commercially available traditional fermented soybean paste in an equal amount was used. However, the fermented soybean paste used in the control contained an equal amount of sodium chloride to that added to this cooked food, therefore, no sodium chloride was added to the control. The results of evaluation are shown in Table 12. The numerical values in Table 12 represent numbers of the expert who chose the sample. The product prepared using the fermented soybean paste-like food material of the invention was preferred in the overall evaluation.

**[Table 12]**

| Evaluation standard | Fermented soybean paste-like food | Control |
|---|---|---|
| Smell - Flavor | 6 | 4 |
| Saltiness preference | 5 | 5 |
| Bitterness preference | 4 | 6 |
| Umami preference | 8 | 2 |
| Overall | 7 | 3 |

### [Example 14]

### (Sauce for Chinese dishes)

To a sauce for a Chinese dish "Stir-fried pork and cabbage (manufactured by Ajinomoto Co., Inc., trade name: Cook Do HOIKORO) was added 1 part by weight or 5 parts by weight of the fermented soybean paste-like food material prepared according to the method described in Example 1, and cooked foods were prepared according to the direction on the product package. For these cooked foods, sensory evaluations by the panel consisting of 10 experts were carried out. The results of evaluation are shown in Table 13. The numerical values in Table 13 represent numbers of the expert who chose the sample. When no fermented soybean paste-like food material was added, a savory flavor was exhibited resulting from the soy sauce, fermented soybean paste and meat, with strong umami taste and richness. However, when the material was added in an amount of 1 part by weight, the flavor was on an equal level to the control, but the richness increased to some extent. Moreover, when the material was added in an amount of 5 parts by weight, the flavor was on an equal level to the control, but the richness remained in aftertaste while also the tightness (vivid taste) was imparted.

**[Table 13]**

| Evaluation standard | Fermented soybean paste-like food 1 part by weight added | Fermented soybean paste-like food 5 parts by weight added | Fermented soybean paste-like food not added |
|---|---|---|---|
| Smell - Flavor | 6 | 3 | 1 |
| Sweetness preference | 5 | 1 | 4 |
| Saltiness preference | 4 | 2 | 4 |
| Bitterness preference | 3 | 1 | 6 |
| Umami preference | 7 | 2 | 1 |
| Overall | 8 | 1 | 1 |

### [Example 15]

### (Seasoning for fried chicken)

To 5 parts by weight of the powdered fermented soybean paste-like food material obtained by freeze-drying of the fermented soybean paste-like food material prepared according to the method described in Example 1 were added 40.5 parts by weight of weak flour, 37.5 parts by weight of corn starch, 4 parts by weight of flavor enhancer (manufactured by Ajinomoto Co., Inc., trade name: "Ajinomoto"), 10 parts by weight of sodium chloride, 0.5 parts by weight of pepper, 1.0 part by weight of onion powder and 1.5 parts by weight of garlic powder. The materials were mixed well to be a seasoning powder. To 90 parts by weight of chicken meat was added 10 parts by weight of the seasoning powder. After putting them into a reclosable plastic bag with zip to mix both ingredients well, the meat was oil-fried in oil at 170°C for 3 minutes. For this fried chicken, sensory evaluations by the panel consisting of 10 experts were carried out. As a control, a similar food prepared through replacing the powdered fermented soybean paste-like food material with a powdered soy sauce in an equal amount was used. This fried chicken exhibited a stronger umami taste than the control, and the texture of meats was better.

### [Example 16]

### (Dressing)

To 18 parts by weight of the fermented soybean paste-like food material prepared according to the method described in Example 1 was added 53 parts by weight of water, and mixed in a mortar to be homogenous. Thereto were added 3 parts by weight of sodium chloride, 18 parts by weight of vinegar (manufactured by Mizkan Co., Ltd., trade name: Okome de Tsukutta Jyun-na Osu), 2 parts by weight of soy sauce (manufactured by YAMASA CORPORATION, trade name: Shoyu), 1 part by weight of honey (manufactured by NIHON HACHIMITSU CO., LTD., trade name: Hachi-mitsu) and 5 parts by weight of a bonito and seaweed stock (manufactured by Ajinomoto Co., Inc., trade name: Honzukuri Ichiban Dashi Kiwami Katsuo Konbu). The materials were mixed to be homogenous thereby obtaining a dressing. For this dressing, sensory evaluations by the panel consisting of 10 experts were carried out. As a control, a similar dressing prepared through replacing the fermented soybean paste-like food material with a commercially available traditional fermented soybean paste in an equal amount was used. Although the control exhibited sharp saltiness, the present dressing exhibited no sharp saltiness and was preferred.

### [Example 17]

### (Soy sauce)

To a light colored soy sauce and a soy sauce was added each 1, 5 or 10 parts by weight of the fermented soybean paste-like food material prepared according to the method described in Example 1, respectively. When the material was added to the light colored soy sauce, the addition of 1 part by weight strengthened the sweetness and umami taste and made the overall tastewell-balanced. When it was added in an amount of 5 parts by weight, the flavor of the fermented soybean paste-like food material became so strong thereby making the soy sauce like having the flavor of a fermented soybean paste. When it was added in an amount of 10 parts by weight, the flavor of the fermented soybean paste-like food material was extremely strong and the soy sauce flavor was lost. When the material was added to the soy sauce, the sauce with 1 part by weight of the material exhibited spread taste, while the addition of 5 parts by weight resulted in rounding the sharp soy sauce flavor and improvement of the entire taste strength. When it was added in an amount of 10 parts by weight, the flavor of the fermented soybean paste-like food material was extremely strong, and a weak flavor of the soy sauce was exhibited. From these results it was revealed that this material is preferably added in an amount of 1 part by weight to light colored soy sauce, and 5 parts by weight to soy sauce.

### [Example 18]

### (Dipping sauce)

To 52 parts by weight of the fermented soybean paste-like food material prepared according to the method described in Example 1 was added 2.5 parts by weight of sodium chloride, and mixed in a mortar to be homogenous. Thereto were added 3 parts by weight of vinegar (manufactured by Mizkan Co., Ltd., trade name: Okome de Tsukutta Jyun-na Osu), 6 parts by weight of soy sauce (manufactured by YAMASA CORPORATION, trade name: Shoyu), 11 parts by weight of honey (manufactured by NIHON HACHIMITSU CO., LTD., trade name: Hachi-mitsu) and 16 parts by weight of bonito and seaweed stock (manufactured by Aj inomoto Co., Inc., trade name: Honzukuri Ichiban Dashi Kiwami Katsuo Konbu). The materials were further mixed, and thereto was gradually added 10 parts by weight of a soybean oil and mixed to be homogenous thereby obtaining a dipping sauce. For thus resulting dip solution, sensory evaluations by the panel consisting of 10 experts were carried out. As a control, a similar food prepared through replacing the fermented soybean paste-like food material with a commercially available traditional fermented soybean paste in an equal amount was used. The results of evaluation are shown in Table 14. The numerical values in Table 14 represent numbers of the expert who chose the sample. The food prepared using the fermented soybean paste-like food material of the invention was preferred in overall evaluation.

**[Table 14]**

| Evaluation standard | Fermented soybean paste-like food | Control |
|---|---|---|
| Smell - Flavor | 4 | 6 |
| Sweetness preference | 9 | 1 |
| Saltiness preference | 10 | 0 (sharp saltiness) |
| Sourness preference | 9 | 1 (sharp vinegar flavor) |
| Bitterness preference | 6 | 4 |
| Umami preference | 9 | 1 |
| Overall | 9 | 1 |

### [Example 19]

### (Dipping sauce for noodles)

To 80 parts by weight of soy sauce (manufactured by Higeta Shoyu Co. Ltd., trade name: Honzen) were added 8 parts by weight of Japanese sweet rice wine for cooking (manufactured Takara Shuzo Co., Ltd., trade name: Takara hon-mirin) and 12 parts by weight of sugar, and mixed. After heating in a hot water bath at 80°C for 30 minutes, the solution was cooled. To 15 parts by weight of the solution ("kaeshi") was added 83 parts by weight of 10-times dilution of bonito and seaweed stock (manufactured by Ajinomoto Co., Inc., trade name: Honzukuri Ichiban Dashi Kiwami Katsuo Konbu), and mixed well to obtain a dipping sauce for noodles. To this dipping sauce for noodles was added 10 to 20 parts by weight of the fermented soybean paste-like food material prepared according to the method described in Example 1, and mixed well. For the resulting dipping sauce for noodles, sensory evaluations by the panel consisting of 10 experts were carried out. As a control, a similar food prepared without adding the fermented soybean paste-like food material was used. The dipping sauce for noodles to which the fermented soybean paste-like food material was added was a mild dipping sauce for noodles exhibiting extreme richness compared to the control in any of the amount of addition.

### [Example 20]

### (White sauce)

To 100 parts by weight of a commercially available white sauce (manufactured by Ajinomoto Co., Inc., White sauce for foodservice use, 10 kg, product packed in a box) was added 1000 parts by weight of milk while heating and stirring. Further, therein was dissolved 0.45 parts by weight of the fermented soybean paste-like food material prepared according to the method described in Example 1 followed by boiling for 3 minutes. As a consequence of evaluating thus resulting white sauce, it exhibited more thickness, umami taste and rich creamy flavor compared to the white sauce prepared without adding the fermented soybean paste-like food material.

### [Example 21]

### (Demiglace sauce)

To 122 parts by weight of a commercially available demiglace sauce (manufactured by Ajinomoto Co., Inc., demiglace sauce for foodservice use, 10 kg, product packed in a box) was added 1000 parts by weight of hot water while heating and stirring. Further, therein was dissolved 0.45 parts by weight of the fermented soybean paste-like food material prepared according to the method described in Example 1 followed by boiling for 5 minutes. As a consequence of evaluating thus resulting demiglace sauce, it exhibited more meaty thickness with a butter flavor and more stewed flavor, in comparison with the demiglace sauce prepared without adding the fermented soybean paste-like food material.

### [Example 22]

### (Tomato sauce)

In 100 parts by weight of a commercially available tomato sauce (manufactured by Aj inomoto Co., Inc., pronto tomato sauce for foodservice use, 2 kg, canned product) was dissolved 0.05 parts by weight of the fermented soybean paste-like food material prepared according to the method described in Example 1 followed by mixing. As a consequence of evaluating thus resulting tomato sauce, richness and more stewed flavor were exhibited while sharp sourness turned to be milder, in comparison with the tomato sauce prepared without adding the fermented soybean paste-like food material.

### [Example 23]

### (Curry roux)

To 100 parts by weight of a commercially available curry roux (manufactured by House Foods Corporation) was added 0.5 parts by weight of the fermented soybean paste-like food material prepared according to the method described in Example 1. As a consequence of evaluating thus resulting curry roux, more stewed flavor and aged flavor were exhibited while spice flavors remained, in comparison with the curry roux prepared without adding the fermented soybean paste-like food material.

### [Example 24]

### (Soybean milk beverage)

To 5 parts by weight of the fermented soybean paste-like food material prepared according to the method described in Example 1 were added 6 parts by weight of honey (manufactured by NIHON HACHIMITSU CO., LTD., trade name: Hachi-mitsu), 85 parts by weight of soybean milk and 4 parts by weight of lemon juice. As a result of mixing the ingredients in a mixer, a beverage exhibiting a favorable taste and flavor was obtained.

### [Example 25]

### (Japanese confectionery, Miso Matsu-kaze)

To 26.5 parts by weight of purified sugar, 23.6 parts by weight of weak flour and 0. 4 parts by weight of baking powder were added 20 parts by weight of water, 6.6 parts by weight of fermented soybean paste (shiro miso) and 0.4 parts by weight of the fermented soybean paste-like food material prepared according to the method described in Example 1, and mixed. Thereafter, 9.6 parts by weigh of whipped egg white and 12.5 parts by weight of Dainagon (a kind of adzuki bean) were further added thereto. The mixture was poured into a mold, and heated in a steamer to prepare a Japanese confectionery. For this Japanese confectionery, sensory evaluations by the panel consisting of 10 experts were carried out. As a control, a similar one prepared without using the fermented soybean paste-like food material was used. The results of evaluation are shown in Table 15. The numerical values in Table 15 represent numbers of the expert who chose the sample. The product prepared using the fermented soybean paste-like food material of the invention was preferred in the overall evaluation.

**[Table 15]**

| Experimental group | Fermented soybean paste-like food added | Fermented soybean paste-like food not added |
|---|---|---|
| Choice comment | 10 Complex flavor and savor. Sweetness, umami taste strengthened. Richness imparted. | 0 Flavor of steamed wheat flour. Smooth sweetness predominant. |

### [Example 26]

### (Ice cream)

To 57. 6 parts by weight of milk was added the fermented soybean paste-like food material prepared according to the method described in Example 1 in an amount of 0. 1 parts by weight, 0.5 parts by weight, 1 part by weight and 3 parts by weight, respectively, and heated. In another bowl were put 12. 9 parts by weight of egg yolk and 13.4 parts by weight of sugar, and mixed until the mixture turned white. Thereto was added the aforementioned milk, and heated in a pan till thickened. Then, thereto was added 16. 1 parts by weight of fresh cream, and mixed in an ice cream maker. The mixture was poured into a mold, and hardened by freezing in a freezer. For thus resulting ice cream, sensory evaluations by the panel consisting of 10 experts were carried out. As a control, a similar one prepared without using the fermented soybean paste-like food material was used. As shown in Table 16, the amount of the added fermented soybean paste-like food material was particularly preferably 1 part by weight.

**[Table 16]**

| Experimental group | Fermented soybean paste-like food 0.5 parts by weight | Fermented soybean paste-like food 1 part by weight | Fermented soybean paste-like food 3 parts by weight | Fermented soybean paste-like food not added |
|---|---|---|---|---|
| Sensory comment | Slightly rich deliciousness imparted | Thick richness imparted being favorable | Slightly harsh taste appeared being unpreferred | Mild flavor of milk and rich sweetness present |

### [Example 27]

### (Miso soup-like food)

Soybean in an amount of 50 kg was soaked in water to allow water absorption, followed by steam-cooking at 114°C for 40 minutes in a steam cooker. The steam-cooked soybean was put in an airtight type koj i making machine, and further mixed with 1 kg of a culture broth of L. lactis AJ110212 (FERM BP-8552) (nisin activity: 2900 IU/ml) and 0.05 kg of a koji mold starter ("Koji mold starter for fermented soybean paste" manufactured by Bioc), followed by subjecting to koji making at 30°C for 43 hrs. For heat removal of the heat generated upon fermentation during koji making, supply of the air sterilized by passing through a HEPA filter was conducted. During the koj i making, koj i was made in a koj i making machine in the state of being airtight except for the time period of "TEIRE"-treatment(a step of stirring the mixture in the koji making machine for the purpose of accelerating the growth of the Koji mold). The "TEIRE"-treatment was carried out for 15 minutes every 10 hours after initiation of the koji making. To thus resulting solid koji were added 14.6 kg of a culture broth of L. lactis AJ110212 (FERM BP-8552) (nisin activity: 2800 IU/ml) and 34.7 kg of steam-cooked rice. After mixing, the mixture was subjected to grinding with a chopper to give a paste form. This paste was packed in a laminated pouch such that 1 kg was filled in one pack. The unrefined soy of fermented soybean paste was hydrolyzed by incubating this pouch at 30°C for 7 days, and a fermented soybean paste-like food material was obtained by heating at 85°C for 40 minutes. To 30 parts by weight of this fermented soybean paste-like food material were added 6 parts by weight of bonito soup stock (manufactured by Aj inomoto Co. Inc., trade name: MARUGOTO KATSUODASHI), 174 parts by weight of hot water and proper amounts of tofu and fried tofu and a miso soup-like food was prepared. The miso soup-like food exhibited strong umami taste and richiness but week saltiness and it was confirmed that the food is a novel food different from a traditional miso soup. Since the miso soup-like food contains almost no salt and a fermented miso paste part in an amount of three times by weight of that in a traditional miso soup can be added and the health value of soybean can be easily taken more.

### [Example 28]

### (Potage soup-like food)

To 140 parts by weight of the fermented soybean paste-like food material prepared according to the method described in Example 27 were added 28 parts by weight of potato powder, 5.6 parts by weight of garlic powder, 0.3 parts by weight of onion powder, 10.2 parts by weight of potato starch, 4.2 parts by weight of salt, 42 pars by weight of liquid bonito soup stock, 3.5 parts by weight of honey, 490 parts by weight of soy milk, 380 parts by weight of hot water and proper amounts of spices such as pepper and ginger and milk, and a potage soup-like food was obtained. The food exhibited different flavor and taste from traditional potage soup, however, it was a soup exhibiting strong umami taste and richiness but week saltiness.

### [Example 29]

### (Soybean spread "SOBORO")

To 38 parts by weight of the fermented soybean paste-like food material prepared according to the method described in Example 27 were added 33 parts by weight of chopped fried soybean, 6 parts by weight of soy sauce and 23 parts by weight of other food material such as soybean oil and powdered bonito stock. The mixture was mixed in a bowl and vacuum packed in an aluminum pouch such that 50g was filled in one pack. The packed mixture was heat-sterilized for 15 minutes in boiling water and a soybean spread-like food was prepared. The food exhibited strong umami taste, thichness in after-taste and richness derived from the fermented soybean paste-like food material. It was confirmed that it can be eaten as it is and eaten with rice as substitute for chicken SOBORO, NATTO (fermented soybean) or FURIKAKE (seasoned powder sprinkled over rice). In addition, it was confirmed that it can be used as a topping or an ingredient for vegetables, tofu (bean curds), omelets or bread. The food can provide a way to take the health value of soybean tastily and easily in daily diets.

### [Industrial Applicability]

Because the novel food obtained according to the method of the invention is delicious, functional ingredients for health of the fermented soybean paste such as isoflavone and saponin in a large quantity can be readily ingested in daily lives. Also, when it is used as a seasoning, it is not only a mere substitute for the fermented soybean paste, but can impart a novel taste and flavor because it exhibits richness and thickness not found in conventional products. Accordingly, the invention is extremely advantageous in industry, particularly in a food industry.

## Claims

1. A method of producing a food which comprises making a solid koji from a plant raw material and koji mold, adding steam-cooked or roasted plant raw material to the resulting solid koji, and hydrolyzing the obtained unrefined soy in the presence of less than 5 % sodium chloride and/or gluconic acid salt.

2. The method according to claim 1 wherein the food is a soybean paste-like food material.

3. The method according to claim 1 or 2 which additionally comprises mixing the food with a food material other than a fermented soybean paste-like food material.

4. The method according to any one of the preceding claims, wherein the said plant raw material comprises soybean, rice or wheat.

5. The method according to any one of the preceding claims, wherein the said koji making and/or hydrolyzing the unrefined soy is carried out in the presence of a culture broth of a bacteriocin producing lactic acid bacterium, disrupted cells, a cell fraction or a supernatant thereof, or in an aseptic and airtight container.

6. The method according to any one of the preceding claims, wherein the said fermented soybean paste-like food material is obtained by (1) adding koj i mold and a culture broth of a bacteriocin producing lactic acid bacterium or disrupted cells, a cell fraction or a supernatant thereof to a plant raw material selected from soybean, rice and wheat, (2) making koji in a koji-making machine in which the outside air is shut out except for the time period of "TEIRE"-treatment, while supplying sterilized air continuously or intermittently, (3) then mixing thus resulting koji with a culture broth of a bacteriocin producing lactic acid bacterium or disrupted cells, a cell fraction or a supernatant thereof, and further optionally mixing with previously steam-cooked or roasted one or more grain(s) selected from soybean, rice and wheat in an amount of 0.01 to 50 times by weight of the resulting koji, (4) then forming the unrefined soy by making the paste form of the mixture, (5) and then hydrolyzing the unrefined soy essentially in the absence of sodium chloride.

7. The method according to any one of the preceding claims, wherein the said bacteriocin is nisin.

8. The method according to any one of the preceding claims, wherein the said food is a seasoning, a soup, a retorted food or a confectionery.

9. The method according to any one of the preceding claims, wherein the said seasoning is a chili seasoning, a soy sauce, a stock, a sauce, a tomato product, a dressing or a roux.

10. A method of producing a processed food comprising a step of shaping the food obtained by the method according to any one of claims 1 to 9.

11. The method according to claim 10, wherein the said processed food is a bar-shaped food, a solid roux type food, a baked confectionery or a wet type food containing 10 to 95% by weight of moisture.

12. The method according to claim 10 or 11, wherein the said shaping step is carried out by using an enzyme.

13. The method according to claim 10 or 11, wherein the said shaping step is carried out by baking.

14. The method according to claim 10 or 11, wherein the said shaping step is carried out by heating and cooling with using fat or oil.

15. The method according to claim 10 or 11, wherein the said shaping step is carried out by heating and cooling with using a gelatin and/or polysaccharide.

16. A food obtained by the method according to any one of claims 1 to 15.
